# EUROPEAN PATENT APPLICATION

(11) **EP 4 795 979 A1**
(43) Date of publication of application: **26.08.2026**
(21) Application number: 24879794.6
(22) Date of filing: 17.10.2024
(51) Int. Cl.: A47C 7/74, B60N 2/56, H05B 3/20, H05B 3/34

(54) **SEAT HEATER**

(30) Priority: 20.10.2023 JP 2023181146
(71) Applicant: Fujikura Ltd., Tokyo 135-8512 (JP)
(72) Inventor: KAMESHIMA, Takashi, Tokyo 135-8512 (JP)
(74) Representative: Ter Meer Steinmeister & Partner
(86) International application number: PCT/JP2024/037066
(87) International publication number: WO 2025/084373

(57) **Abstract**

A seat heater 1A includes a substrate 10. The substrate includes a first U-shaped portion 20 and a second U-shaped portion 30 that is provided inside the first U-shaped portion. The first U-shaped portion includes a pair of first extending portions 21a and 21b, and the second U-shaped portion includes a pair of second extending portions 31a and 31b that extend parallel to the first extending portions. First meandering portions 22a and 22b of the first extending portion include: first convex portions 221a and 221b that protrude toward outside of the seat heater 1 in plan view; and second convex portions 222a and 222b that protrude toward inside of the seat heater 1 in plan view, and second meandering portions 32a and 32b of the first extending portion include: third convex portions 321a and 321b that protrude toward outside in plan view; and fourth convex portions 322a and 322b that protrude toward inside in plan view.

## Description

### Technical Field

The present invention relates to a seat heater that is installed in a seat.
For designated countries that allow incorporation by reference of documents, the content of Patent Application No. 2023-181146, filed in Japan on October 20, 2023, is incorporated herein by reference and made a part of the description of this specification.

### Background Art

A known seat heater to be disposed in a seat surface portion of a vehicle seat includes an electrically insulating film-like substrate, electrodes formed on the substrate, and polymer resistors connected to the electrodes (see, for example, Patent Document 1).

This substrate of the seat heater is formed with: a first cutout portion where an outer edge portion on the front side of the vehicle is cut out extending toward the rear side of the vehicle; second cutout portions where the outer edge portion on the first cutout portion side is cut out extending toward opposite sides with respect to the first cutout portion; a plurality of first slits extending linearly in a left-right direction of the vehicle; and a plurality of second slits extending linearly in a front-rear direction (see, for example, FIG. 3 of Patent Document 1).

Such a seat heater is divided into two parts in the left-right direction of the vehicle by the first cutout portion, and of these two division parts, the part to the right of the vehicle from the first cutout portion constitutes a right heater portion corresponding to the right thigh of an occupant, and the part to the left of the vehicle from the first cutout portion constitutes a left heater portion corresponding to the left thigh of the occupant.

Thus, the second cutout portion and the first and second slits enable the right and left heater portions to deform to extend in the front-rear and left-right directions of the vehicle in response to deformation of the seat surface portion when the occupant sits in the seat.

### Prior Art Document

### Patent Document

Patent Document 1: Japanese Patent Application Publication No. 2008-238926

### Summary of Invention

### Problems to be Solved by Invention

However, in the above-described conventional technology, the second slits are not continuous with each other near the center of each heater portion, and there are connecting portions where no second slits are formed. Therefore, deformation in the left-right direction of the vehicle is restricted at this connecting portion, causing a problem of poor seating comfort.

A problem to be solved by the present invention is to provide a seat heater capable of improving seating comfort.

### Means for Solving Problems

[1] Aspect 1 of the present invention is a seat heater including: a flexible substrate; and a heater portion formed on the substrate. The substrate includes: a first U-shaped portion that has a substantially U-shaped planar shape; and a second U-shaped portion that is provided inside the first U-shaped portion and having a substantially U-shaped planar shape, the first U-shaped portion includes: a pair of first extending portions that extend along a first direction; and a first coupling portion that couples first ends of the pair of first extending portions, the second U-shaped portion includes: a pair of second extending portions that extend substantially parallel to the first extending portions; and a second coupling portion that couples second ends of the pair of second extending portions, the first extending portion includes a plurality of first meandering portions that are arranged along the first direction, the second extending portion includes a plurality of second meandering portions that are arranged along the first direction, the first meandering portion includes: a first convex portion that is bent to protrude toward outside of the seat heater in plan view; and a second convex portion that is bent to protrude toward inside of the seat heater in plan view, the second meandering portion includes: a third convex portion that is bent to protrude toward outside in plan view; and a fourth convex portion that is bent to protrude toward inside in plan view.
[2] Aspect 2 of the present invention may be the seat heater of the first aspect, wherein the first coupling portion includes a plurality of third meandering portions that are arranged along a second direction different from the first direction, and the third meandering portions include: a fifth convex portion that is bent to protrude toward outside of the seat heater in plan view; and a sixth convex portion that is bent to protrude toward inside of the seat heater in plan view.
[3] Aspect 3 of the present invention may be the seat heater of Aspect 1 or 2, wherein the second coupling portion includes a fourth meandering portion, and the fourth meandering portion includes: a seventh convex portion that is bent to protrude toward outside of the seat heater in plan view; and an eighth convex portion that is bent to protrude toward inside of the seat heater in plan view.
[4] Aspect 4 of the present invention may be the seat heater of any one of Aspects 1 to 3, wherein the third convex portion faces a first opening between the second convex portions adjacent to each other.
[5] Aspect 5 of the present invention may be the seat heater of Aspect 4, wherein the fourth convex portion of one of the second extending portions faces the fourth convex portion of the other of the second extending portions.
[6] Aspect 6 of the present invention may be the seat heater of any one of Aspects 1 to 5, wherein the first to fourth convex portions each have an arc shape.
[7] Aspect 7 of the present invention may be the seat heater of any one of Aspects 1 to 6, wherein the first meandering portion includes a first straight portion that couples the first convex portion and the second convex portion, the second meandering portion includes a second straight portion that couples the third convex portion and the fourth convex portion, and a length of the second straight portion is longer than a length of the first straight portion.
[8] Aspect 7 of the present invention may be the seat heater of Aspect 3, wherein the fifth to eighth convex portions each have an arc shape.
[9] Aspect 9 of the present invention may be the seat heater of any one of Aspects 1 to 8, wherein the substrate further includes a first communication hole that penetrates the substrate and that is formed between the first U-shaped portion and the second U-shaped portion, and the first communication hole includes: a pair of first gaps that are formed between the first extending portion and the second extending portion and that extend along the first direction; and a second gap that is formed between the first coupling portion and the second coupling portion and that communicates with the pair of first gaps.
[10] Aspect 10 of the present invention may be the seat heater of any one of Aspects 1 to 9, wherein the substrate further includes a second communication hole that penetrates the substrate and that is formed inside the second U-shaped portion, and the second communication hole extends along the first direction.
[11] Aspect 11 of the present invention may be the seat heater of any one of Aspects 1 to 10, wherein the substrate is arranged at a position corresponding to a hanging groove of a seat, and further includes a coupling portion that couples the first U-shaped portion and the second U-shaped portion.
[12] Aspect 11 of the present invention may be the seat heater of any one of Aspects 1 to 12, wherein the second extending portion further includes an expanded portion that is connected to the second meandering portion, and one end of the expanded portion is a fixed end connected to the second meandering portion, and the other end of the expanded portion is a free end.

### Effects of Invention

A seat heater of the present invention includes a first U-shaped portion and a second U-shaped portion that is provided inside the first U-shaped portion. Furthermore, first and second extending portions of the first and second U-shaped portions include first and second meandering portions that extend along a first direction, respectively. Therefore, the seat heater of the present invention is easily deformable in at least four directions, and is less likely to be restricted in deformation in a specific direction, thereby improving seating comfort.

### Brief Description of Drawings

[FIG. 1] FIG. 1 is a plan view illustrating a seat in which a seat heater according to a first embodiment of the present invention is installed.
[FIG. 2] FIG. 2 is a plan view illustrating the seat heater according to the first embodiment of the present invention.
[FIG. 3] FIG. 3 is an enlarged cross-sectional view taken along line III-III of FIG. 1.
[FIG. 4] FIG. 4 is a plan view illustrating a substrate according to the first embodiment of the present invention.
[FIG. 5] FIG. 5 is an enlarged plan view illustrating a portion V of FIG. 4.
[FIG. 6] FIG. 6 is an enlarged plan view illustrating a portion IV of FIG. 4.
[FIG. 7] FIG. 7 is a plan view illustrating a seat heater in a second embodiment of the present invention.
[FIG. 8] FIG. 8 is a plan view illustrating a seat in which the seat heater in the second embodiment of the present invention is installed.
[FIG. 9] FIG. 9 presents a cross-sectional view (a) taken along line IXa-IXa of FIG. 8, and a cross-sectional view (b) taken along line IXb-IXb of FIG. 8.
[FIG. 10] FIG. 10 is an enlarged plan view illustrating a seat heater in a third embodiment of the present invention.
[FIG. 11] FIG. 11 is a cross-sectional view taken along line XI-XI of FIG. 10.

### Mode(s) for Carrying out the Invention

Embodiments of the present invention will be described below with reference to the drawings.

### <First Embodiment>

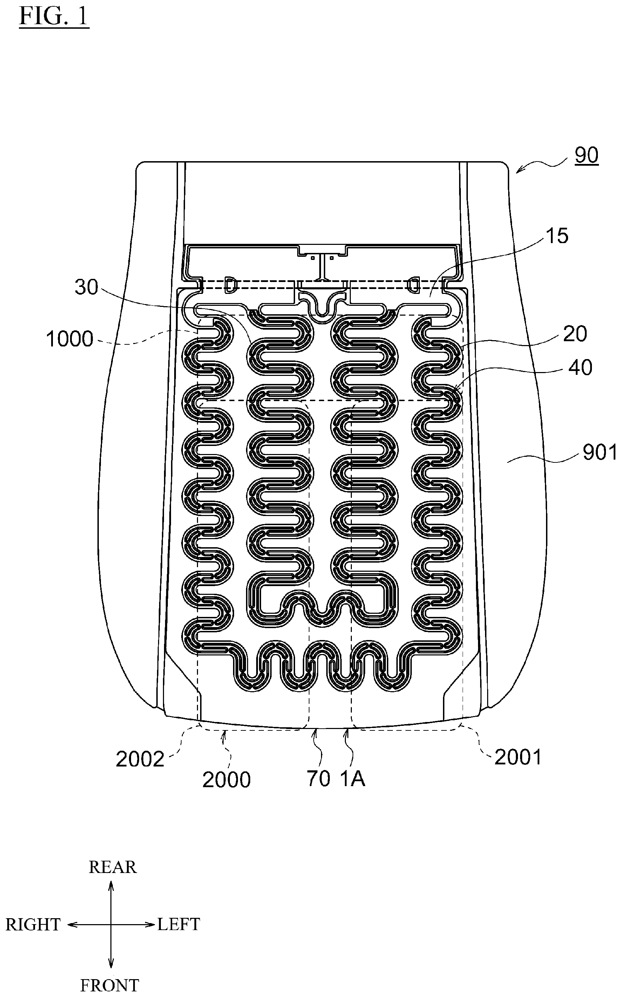

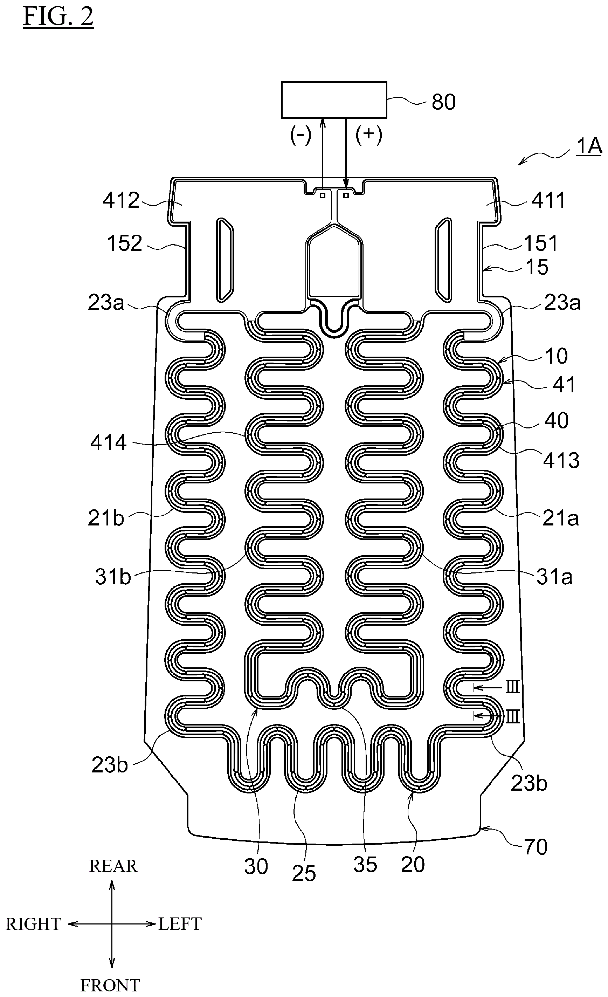

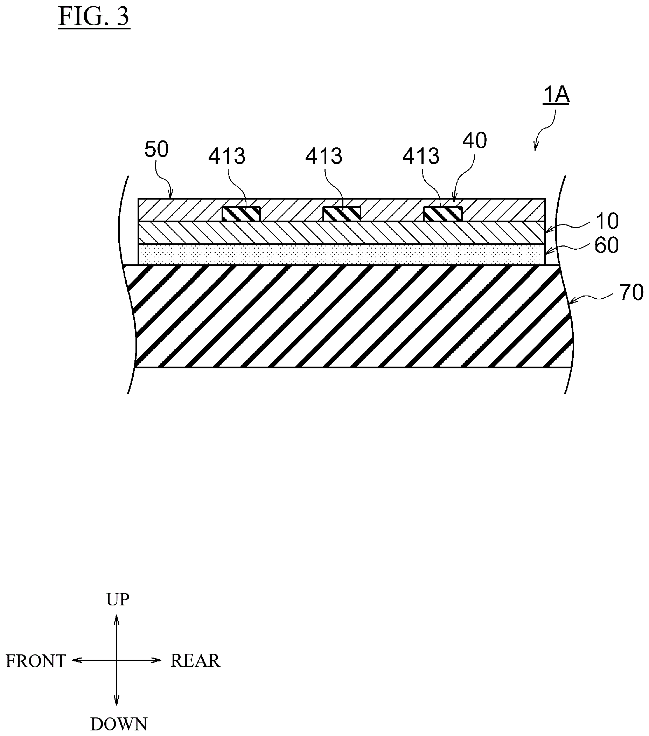

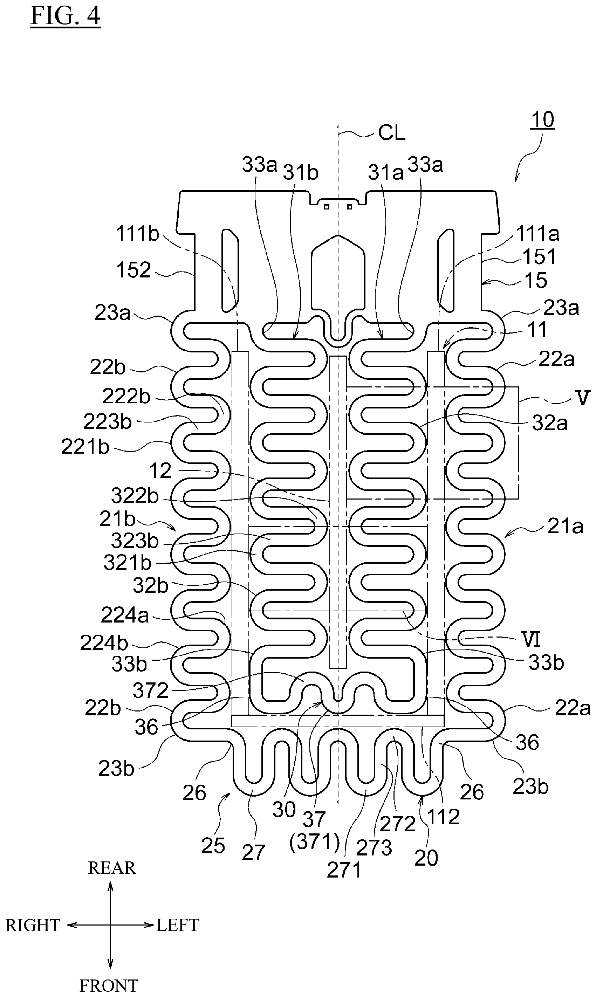

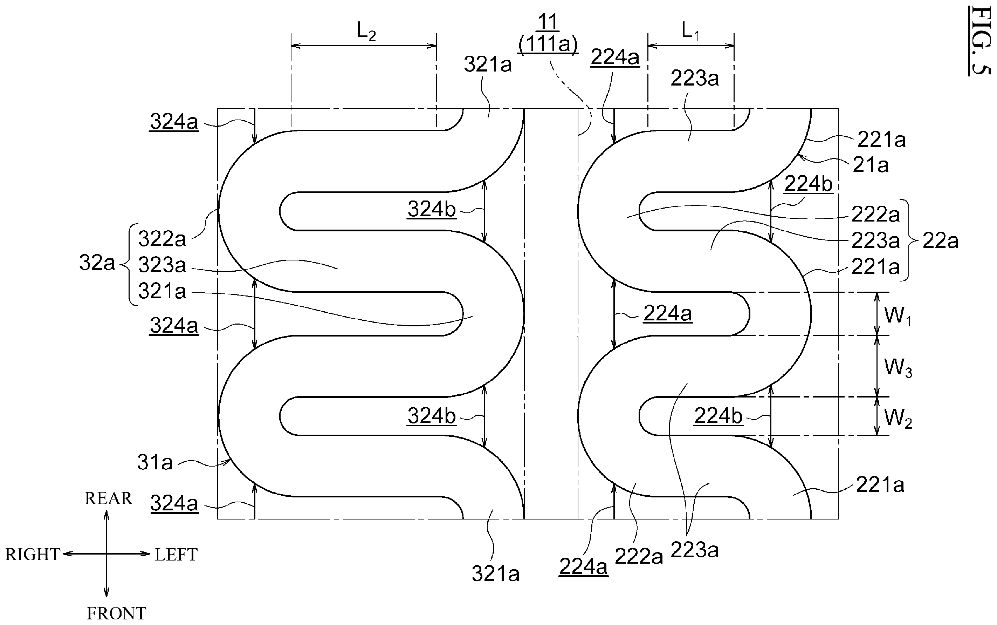

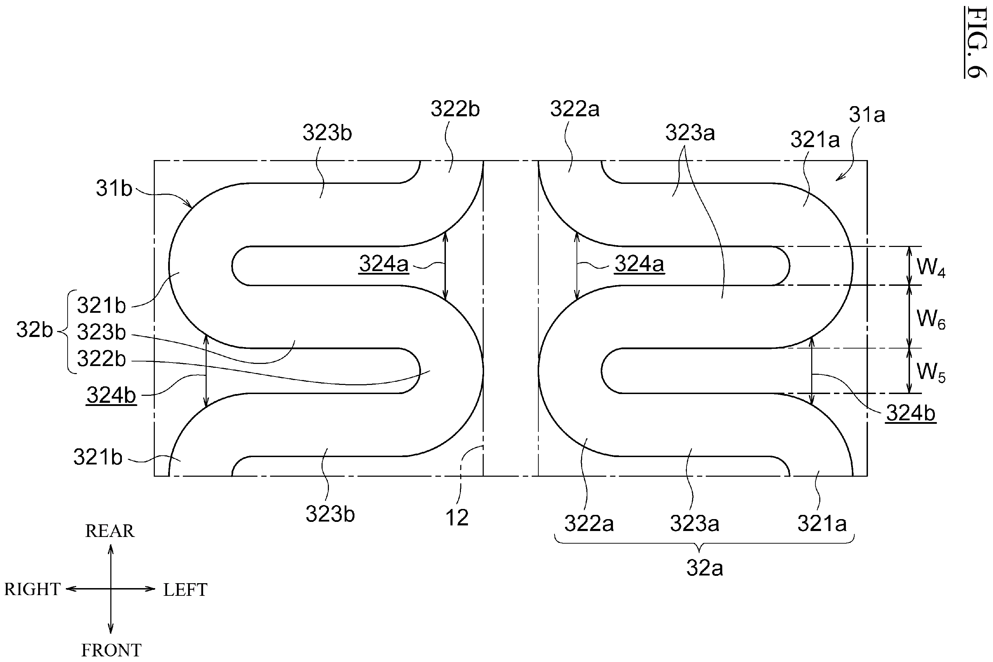

FIG. 1 is a plan view illustrating an example of a seat 90 in which a seat heater 1A in a first embodiment is installed. FIG. 2 is a plan view illustrating the seat heater 1A in the first embodiment. FIG. 3 is an enlarged cross-sectional view taken along line III-III of FIG. 1. FIG. 4 is a plan view illustrating a substrate 10 in the first embodiment. FIG. 5 is an enlarged plan view illustrating a portion V of FIG. 2. FIG. 6 is an enlarged plan view illustrating a portion IV of FIG. 2.

The seat heater 1A in the present embodiment is used as, but not particularly limited to, a seat heater for a vehicle such as an automobile. Specifically, as illustrated in FIG. 1, it is installed in a seat surface 901 of the seat 90 of the vehicle for use. Note that, in FIG. 1, the seat heater 1A is exposed on the seat surface 901, but in reality, the seat heater 1A is covered by a seat cover (trim cover). Note that, although the seat heater 1A is exemplified as an in-vehicle seat heater in the present embodiment, the seat in which this seat heater 1A is to be installed is not limited to a seat for a vehicle, and may be a seat other than for a vehicle.

As illustrated in FIGS. 2 and 3, the sheet heater 1A includes a substrate 10, a heater portion 40, an insulating resist layer 50 (see FIG. 3), an adhesive layer 60 (see FIG. 3), and a substrate holding portion 70.

The substrate 10 is a resin film that is flexible and electrically insulating. Examples of resin material constituting such a resin film include polyethylene terephthalate (PET), polyethylene naphthalate (PEN), polyimide (PI), liquid crystal polymer (LCP), polyetherimide (PEI), polyether ether ketone (PEEK), and aramid.

As illustrated in FIG. 4, the substrate 10 includes a wide portion 15, a first U-shaped portion 20, and a second U-shaped portion 30 arranged inside the first U-shaped portion 20. The substrate 10 having such a shape can be produced, for example, by punching a flat plate-like resin sheet.

The wide portion 15 is located on the rear side of the substrate 10 in the vehicle. The wide portion 15 is located, but not particularly limited to, below a seat backrest (not illustrated) when the seat heater 1A is installed in the seat 90, as illustrated in FIG. 1.

As illustrated in FIG. 4, the wide portion 15 in the present embodiment has a substantially rectangular outer shape. This wide portion 15 includes a left side portion 151 and a right side portion 152. The left side portion 151 is located on the left side of the vehicle with respect to a center line CL of the seat heater 1A. On the other hand, the right side portion 152 is located on the right side of the vehicle with respect to the center line CL. The planar shape of the left side portion 151 is line-symmetrical to the planar shape of the right side portion 152 with respect to the center line CL. Note that, in the present embodiment, the center line CL is an imaginary straight line that bisects the substrate 10 in a left-right direction (short side direction of the substrate 10) and that extends along a front-rear direction (long side direction of the substrate 10).

The first U-shaped portion 20 having a substantially U-shaped planar shape is connected to the wide portion 15. This first U-shaped portion 20 is located on the front side of the wide portion 15, and two rear end portions 23a of the first U-shaped portion 20 are connected to the left side portion 151 and the right side portion 152, respectively. This first U-shaped portion 20 constitutes a part of an outermost peripheral end portion of the substrate 10.

As illustrated in FIG. 1, when the seat heater 1A is installed in the seat 90, this first U-shaped portion 20 is arranged in the seat surface 901 on which an occupant sits, and is also located at a position corresponding to the occupant's buttocks 1000 to thighs 2000.

As illustrated in FIG. 4, the first U-shaped portion 20 includes first extending portions 21a and 21b that make a pair of left and right, and a first coupling portion 25.

The first extending portion 21a is provided on the left side of the vehicle with respect to the center line CL. This first extending portion 21a is connected to the left side portion 151 of the wide portion 15, and is formed integrally with the left side portion 151. The first extending portion 21a extends from the left side portion 151 toward a front direction of the vehicle. Note that the front direction in the figure corresponds to an example of a "first direction" in aspects of the present invention.

The first extending portion 21a includes a plurality of first meandering portions 22a arranged along the front direction of the vehicle from the left side portion 151. The first meandering portion 22a in the present embodiment has a substantially S-shape, and therefore, the first extending portion 21a in the present embodiment extends overall toward the front direction of the vehicle while repeatedly meandering in the left-right direction.

As illustrated in FIG. 5, the first meandering portion 22a includes a first convex portion 221a, a second convex portion 222a, and a first straight portion 223a. The first convex portion 221a in the present embodiment is curved to protrude toward a left direction that is substantially perpendicular to the front direction in plan view, unlike the front direction. The shape of this first convex portion 221a is, but not particularly limited to, a semicircular arc shape. Note that the left direction in the first meandering portion 22a in the figure corresponds to an example of "outside of the seat heater" in aspects of the present invention.

The shape of the first convex portion 221a, which is an arc shape, makes it easier for the first extending portion 21a to expand and contract in the front direction, and also improves durability against the expansion and contraction. Note that the shape of the first convex portion 221a in the present embodiment is not limited to a semicircular arc shape. The first convex portion 221a may have any shape that allows the first meandering portion 22a to expand and contract along the front-rear direction in the figure. For example, the first convex portion 221a may have a sector shape that is not a semicircle, that is, a sector arc shape with a central angle other than 180°. Further, the shape of the first convex portion 221a may be a curved shape other than a circular arc. Alternatively, the shape of the first convex portion 221a may be a polygonal line shape.

On the other hand, the second convex portion 222a in the present embodiment is curved to protrude toward a right direction, opposite to the left direction, in plan view. The shape of this second convex portion 222a is also, but not particularly limited to, a semicircular arc shape. The shape of the second convex portion 222a, which is an arc shape, makes it easier for the first extending portion 21a to expand and contract in the front direction, and also improves durability against the expansion and contraction, as described above. Note that the right direction in the first meandering portion 22a in the figure corresponds to an example of "inside of the seat heater" in aspects of the present invention. Further, like the shape of the first convex portion 221a, the shape of the second convex portion 222a is not limited to a semicircular arc shape, and may be a sector arc shape that is not a semicircle, a curved shape other than an arc, or a polygonal line shape.

In the present embodiment, one second convex portion 222a is arranged to overlap with two adjacent first convex portions 221a when viewed from the left direction (or right direction), and faces the two first convex portions 221a. In the present embodiment, a rear end portion of the second convex portion 222a faces a front end portion of the first convex portion 221a, which is located rearward of the second convex portion 222a, while a front end portion of the second convex portion 222a faces a rear end portion of the first convex portion 221a, which is located forward of the second convex portion 222a.

In the present embodiment, the first straight portion 223a extends along the left-right direction, and couples the first convex portion 221a and the second convex portion 222a. This first straight portion 223a couples the front end portion of the first convex portion 221a to the rear end portion of the second convex portion 222a, or couples the rear end portion of the first convex portion 221a to the front end portion of the second convex portion 222a. Note that, in the present embodiment, the first convex portion 221a is coupled to the second convex portion 222a via the first straight portion 223a, but it may be directly coupled to the second convex portion 222a.

In such a first extending portion 21a, a first opening 224a is formed between adjacent second convex portions 222a, and a second opening 224b is formed between adjacent first convex portions 221a. In the present embodiment, the plurality of first openings 224a and second openings 224b are formed intermittently across the entire first extending portion 21a, allowing the first extending portion 21a to deform to expand and contract along the front-rear direction in the figure.

Further, a minimum width W1 of the first opening 224a and a minimum width W2 of the second opening 224b can both be set to, but not particularly limited to, 1/2 or more times a line width W3 of the first meandering portion 22a (W1 ≥ W3 × 1/2, W2 ≥ W3 × 1/2). When the minimum width W1 of the first opening 224a and the minimum width W2 of the second opening 224b satisfy the above-mentioned numerical ranges, a relatively wide opening is formed for the first meandering portion 22a, thereby increasing the amount of expansion and contraction possible along the front-rear direction of the first extending portion 21a.

As illustrated in FIG. 4, the first extending portion 21b is provided on the right side of the center line CL. This first extending portion 21b is connected to the right side portion 152 of the wide portion 15, and is formed integrally with the right side portion 152. The first extending portion 21b extends toward the front direction of the vehicle while meandering in the left-right direction.

The shape of the first extending portion 21b in the present embodiment is line-symmetrical to the shape of the first extending portion 21a with respect to the center line CL. Accordingly, the first extending portion 21b also includes a plurality of first meandering portions 22b arranged along the front direction of the vehicle from the right side portion 152. Note that the shape of the first extending portion 21b may not be line-symmetrical to the shape of the first extending portion 21a.

As illustrated in FIG. 4, the first meandering portion 22b includes a first convex portion 221b, a second convex portion 222b, and a first straight portion 223b. In the present embodiment, the shapes of the first convex portion 221b, the second convex portion 222b, and the first straight portion 223b are line-symmetrical to the shapes of the first convex portion 221a, the second convex portion 222a, and the first straight portion 223a, respectively. Note that these shapes may be different from the shapes of the first convex portion 221a, the second convex portion 222a, and the first straight portion 223a, respectively.

In such a first extending portion 21b, a second opening 224b is formed between adjacent first convex portions 221b, and a first opening 224a is formed between adjacent second convex portions 222b. This allows the first extending portion 21b to expand and contract along the front-rear direction.

Further, also in the first extending portion 21b, a minimum width W1 of the first opening 224a and a minimum width W2 of the second opening 224b are both set to, but not particularly limited to, 1/2 or more times a line width W3 of the first meandering portion 22a (W1 ≥ W3 × 1/2, W2 ≥ W3 × 1/2). This makes it possible to increase the amount of expansion and contraction of the first extending portion 21b along the front-rear direction.

The first coupling portion 25 is provided on the front side of the pair of first extending portions 21a and 21b, and couples the front end portions 23b and 23b of the pair of first extending portions 21a and 21b. The first coupling portion 25 in the present embodiment extends along the left-right direction to intersect with the center line CL. Note that the front end portion 23b corresponds to an example of a "first end portion" in aspects of the present invention.

The first coupling portion 25 includes a pair of L-shaped portions 26 and a plurality of third meandering portions 27. The L-shaped portions 26 of the pair are provided at left and right end portions of the first coupling portion 25, respectively, and each has a substantially L-shaped planar shape. The L-shaped portions 26 of the pair are connected to the front end portions 23b of the first extending portions 21a and 21b, respectively.

The plurality of third meandering portions 27 are arranged between the pair of L-shaped portions 26 in a left direction (or a right direction) different from the front direction. The third meandering portion 27 in the present embodiment has a substantially S-shape, and therefore, the first coupling portion 25 in the present embodiment extends in the left-right direction of the vehicle while repeatedly meandering in the front-rear direction. The third meandering portion 27 includes a fifth convex portion 271, a sixth convex portion 272, and a third straight portion 273. Note that the left or right direction in the figure corresponds to an example of a "second direction" in aspects of the present invention.

The fifth convex portion 271 in the present embodiment is curved to protrude toward the front direction in plan view. The shape of this fifth convex portion 271 is, but not particularly limited to, a semicircular arc shape. Note that the shape of the fifth convex portion 271 may be a sector arc shape that is not the semicircle described above, a curved shape other than an arc, or a polygonal line shape. Note that the front direction in the first coupling portion 25 in the figure corresponds to an example of "outside of the seat heater" in aspects of the present invention.

On the other hand, the sixth convex portion 272 in the present embodiment is curved to protrude toward a rear direction in plan view. The shape of this sixth convex portion 272 is also, but not particularly limited to, a semicircular arc shape. Note that the shape of the sixth convex portion 272 may be a sector arc shape that is not the semicircle described above, a curved shape other than an arc, or a polygonal line shape. Note that the rear direction in the first coupling portion 25 in the figure corresponds to an example of "inside of the seat heater" in aspects of the present invention.

This sixth convex portion 272 is arranged to overlap with two adjacent fifth convex portions 271 when viewed from the front direction (or rear direction), and faces the two fifth convex portions 271. In the present embodiment, a left end portion of the sixth convex portion 272 faces a right end portion of the fifth convex portion 271, which is located to the left of the sixth convex portion 272, while a right end portion of the sixth convex portion 272 faces a left end portion of the fifth convex portion 271, which is located to the right of the sixth convex portion 272.

The third straight portion 273 extends along the front-rear direction, and couples the fifth convex portion 271 and the sixth convex portion 272. This third straight portion 273 couples the left end portion of the fifth convex portion 271 to the right end portion of the sixth convex portion 272, or couples the right end portion of the fifth convex portion 271 to the left end portion of the sixth convex portion 272. Note that, in the present embodiment, the fifth convex portion 271 may be directly coupled to the sixth convex portion 272.

A second U-shaped portion 30 having a substantially U-shaped planar shape that is narrower than the first U-shaped portion 20 is provided inside the first U-shaped portion 20 and a first communication hole 11. This second U-shaped portion 30 is separated from the first U-shaped portion 20 by the first communication hole 11.

The second U-shaped portion 30 is located on the front side of the wide portion 15, and two rear end portions 33a of the second U-shaped portion 30 are connected to the left side portion 151 and the right side portion 152, respectively. Accordingly, the second U-shaped portion 30 is surrounded by the wide portion 15 and the first U-shaped portion 20 in plan view.

As illustrated in FIG. 1, when the seat heater 1A is installed in the seat 90, the second U-shaped portion 30 is arranged in the seat surface 901 on which an occupant sits, and as with the first U-shaped portion 20, is located at a position corresponding to the occupant's buttocks 1000 to thighs 2000.

As illustrated in FIG. 4, the second U-shaped portion 30 includes second extending portions 31a and 31b that make a pair of left and right, and a second coupling portion 35. The second extending portion 31a is provided on the left side of the center line CL. The second extending portion 31a is provided between the first extending portion 21a and the center line CL, and is closer to the center line CL than to the first extending portion 21a.

This second extending portion 31a is connected to the left side portion 151 of the wide portion 15 on the inside of the first extending portion 21a, and is formed integrally with the left side portion 151. The second extending portion 31a extends toward the front direction of the vehicle, as with the first extending portion 21a.

The second extending portion 31a includes a plurality of second meandering portions 32a arranged along the front direction. The second meandering portion 32a in the present embodiment has a substantially S-shape that is wider than the first meandering portion 22a. The second extending portion 31a in the present embodiment extends overall toward the front direction of the vehicle while repeatedly meandering in the left-right direction with an amplitude greater than that of the first extending portion 21a.

As illustrated in FIG. 5, the second meandering portion 32a includes a third convex portion 321a, a fourth convex portion 322a, and a second straight portion 323a. The third convex portion 321a in the present embodiment is curved to protrude toward the left direction of the vehicle in plan view, and has substantially the same shape as the first convex portion 221a described above. The third convex portion 321a, which has an arc shape, improves the stretchability and durability of the second meandering portion 32a. Note that the shape of the third convex portion 321a may be a sector arc shape that is not the semicircle described above, a curved shape other than an arc, or a polygonal line shape.

Further, the third convex portion 321a also faces the first opening 224a of the first meandering portion 22a. Therefore, the third convex portion 321a of the second meandering portion 32a is arranged so as to be shifted in the front-rear direction relative to the second convex portion 222a of the first meandering portion 22a. In such a seat heater 1A, the distance between the third convex portion 321a and the second convex portion 222a, which are arranged so as to be shifted from each other in the front-rear direction, is larger in a diagonal direction (a direction inclined relative to the front-rear and left-right directions) than the distance between the third convex portion and the second convex portion when the third convex portion does not face the first opening and the entire third convex portion faces the entire second convex portion. This allows a larger possible amount of extension of the seat heater 1A in the diagonal direction. Accordingly, it is possible to improve the seating comfort when sitting on the seat 90. In other words, when an occupant sits on the seat 90, the occupant is less likely to feel a stiff feeling, and abnormal noises due to deformation of the seat heater 1A are also less likely to occur.

Further, when an occupant sits on the seat 90 (see FIG. 1) of the vehicle, the occupant first sits on the seat 90 from either the left or right side of the vehicle and then turns the occupant's own body forward to adjust the seating position. On the other hand, when getting out of the vehicle, the occupant turns the occupant's own body to either the left or right side of the vehicle and then leaves the seat 90. Depending on such occupant's own body movements when getting in and out of the vehicle, loads are applied to the seat surface 901 in various directions, but the seat heater 1A, which has a large possible amount of extension in the diagonal direction as described above, can improve durability against repeated getting in and out of the vehicle.

Furthermore, the third convex portion 321a and the second convex portion 222a are arranged so as to be shifted from each other in the front-rear direction, allowing the first extending portion 21a and the second extending portion 31a to be brought closer together, and it is therefore possible to increase the area of the heater portion 40 at a position corresponding to the occupant's left thigh 2001 (see FIG. 1).

As illustrated in FIG. 5, the fourth convex portion 322a in the present embodiment is curved to protrude toward the right direction in plan view, and has substantially the same shape as the second convex portion 222a described above. The fourth convex portion 322a, which has an arc shape, improves the stretchability and durability of the second meandering portion 32a. Note that the shape of the fourth convex portion 322a may also be a sector arc shape that is not the semicircle described above, a curved shape other than an arc, or a polygonal line shape.

In the present embodiment, one fourth convex portion 322a is arranged to overlap with two adjacent third convex portions 321a when viewed from the left direction (or right direction), and faces the two third convex portions 321a. In the present embodiment, a rear end portion of the fourth convex portion 322a faces a front end portion of the third convex portion 321a, which is located rearward of the fourth convex portion 322a, while a front end portion of the fourth convex portion 322a faces a rear end portion of the third convex portion 321a, which is located forward of the fourth convex portion 322a.

Further, as illustrated in FIG. 5, the second straight portion 323a in the present embodiment extends along the left-right direction, and couples the third convex portion 321a and the fourth convex portion 322a. This second straight portion 323a couples the front end portion of the third convex portion 321a to the rear end portion of the fourth convex portion 322a, or couples the rear end portion of the third convex portion 321a to the front end portion of the fourth convex portion 322a. Note that, in the present embodiment, the third convex portion 321a may be directly coupled to the fourth convex portion 322a.

A length L2 of the second straight portion 323a is longer than a length L1 of the first straight portion 223a (L2 > L1). As illustrated in FIG. 4, the second U-shaped portion 30 is located inside the first U-shaped portion 20, and accordingly, the size of the second U-shaped portion 30 (the width in the front-rear direction and the width in the left-right direction) is smaller than the size of the first U-shaped portion 20. Even in such a case, in the present embodiment, since the length L2 of the second straight portion 323a is made longer than the length L1 of the first straight portion 223a, the length of the second U-shaped portion 30 can be made approximately the same as the length of the first U-shaped portion 20. Accordingly, a resistance value of a second heating wire 414 (described later) formed on the second U-shaped portion 30 can be made the same as a resistance value of a first heating wire 413 (described later) formed on the first U-shaped portion 20, thereby suppressing the occurrence of a distribution of heat generation in the heater portion 40.

Further, in the second extending portion 31a, a third opening 324a is formed between adjacent fourth convex portions 322a, and a fourth opening 324b is formed between adjacent third convex portions 321a. This fourth opening 324b faces the second convex portion 222a. In the present embodiment, the plurality of third openings 324a and fourth openings 324b are formed intermittently across the entire second extending portion 31a, allowing the second extending portion 31a to expand and contract along the front-rear direction in the figure.

Further, as illustrated in FIG. 6, also in the second extending portion 31a, a minimum width W4 of the third opening 324a and a minimum width W5 of the fourth opening 324b are both set to, but not particularly limited to, 1/2 or more times a line width W6 of the second meandering portion 32a (W4 ≥ W6 × 1/2, W5 ≥ W6 × 1/2). This makes it possible to increase the amount of expansion and contraction of the second extending portion 31a along the front-rear direction.

As illustrated in FIG. 4, the second extending portion 31b is provided on the right side of the center line CL. The second extending portion 31b is provided between the first extending portion 21b and the center line CL, and is closer to the center line CL than to the first extending portion 21b.

This second extending portion 31b is connected to the right side portion 152 on the inside of the first extending portion 21b, and is formed integrally with the right side portion 152. The second extending portion 31b extends forward of the vehicle while meandering in the left-right direction.

The shape of the second extending portion 31b in the present embodiment, is line-symmetrical to the shape of the second extending portion 31a with respect to the center line CL. Accordingly, the second extending portion 31b also includes a plurality of second meandering portions 32b arranged along the front direction of the vehicle from the right side portion 152. Note that the shape of the second extending portion 31b may not be line-symmetrical to the shape of the second extending portion 31a.

As illustrated in FIG. 6, the second meandering portion 32b includes a third convex portion 321b, a fourth convex portion 322b, and a second straight portion 323b. In the present embodiment, the shapes of the third convex portion 321b, the fourth convex portion 322b, and the second straight portion 323b of the second meandering portion 32b are line-symmetrical to the shapes of the third convex portion 321a, the fourth convex portion 322a, and the second straight portion 323a, respectively. Note that these shapes may be different from the shapes of the third convex portion 321a, the fourth convex portion 322a, and the second straight portion 323a, respectively.

In such a second extending portion 31b, a fourth opening 324b is formed between adjacent third convex portions 321b, and a third opening 324a is formed between adjacent fourth convex portions 322b. This allows the second extending portion 31b to expand and contract along the front-rear direction.

Further, as illustrated in FIG. 4, the third convex portion 321b faces the first opening 224a. Therefore, the third convex portion 321b of the second meandering portion 32b is arranged so as to be shifted in the front-rear direction relative to the second convex portion 222b of the first meandering portion 22b. In such a seat heater 1A, as described above, the distance between the third convex portion 321b and the second convex portion 222b, which are arranged so as to be shifted from each other in the front-rear direction, is larger in a diagonal direction, allowing a larger possible amount of extension of the seat heater 1A in the diagonal direction even between the first extending portion 21b and the second extending portion 31b. Accordingly, it is possible to improve the seating comfort when sitting on the seat 90.

Furthermore, the third convex portion 321b and the second convex portion 222b are arranged so as to be shifted from each other in the front-rear direction, allowing the first extending portion 21b and the second extending portion 31b to be brought closer together, and it is therefore possible to increase the area of the heater portion 40 at a position corresponding to the occupant's right thigh 2002 (see FIG. 1).

Further, as illustrated in FIG. 6, in the present embodiment, the fourth convex portions 322a and 322b face each other on the inside of the second U-shaped portion 30. Therefore, inside the second U-shaped portion 30, the third openings 324a also face each other. A space (a second communication hole 12) between the second extending portions 31a and 31b corresponds to a space between the left and right thighs 2000 of the occupant (see FIG. 1), and therefore, there is no need to bring the second extending portions 31a and 31b close to each other to increase the amount of heat generated. Therefore, the amount of heat generated by the heater portion 40 at the position corresponding to the space between the occupant's thighs 2000 is set relatively smaller than the amount of heat generated by the heater portion 40 at the position corresponding to thighs 2000. As a result, the seat heater 1A in the present embodiment can concentrate the heat generated by the first and second heating wires 413 and 414 at a required position.

As illustrated in FIG. 4, the second coupling portion 35 couples front end portions 33b and 33b of the pair of second extending portions 31a and 31b. The second coupling portion 35 is provided behind the first coupling portion 25, and extends along the left-right direction to intersect with the center line CL. Note that the front end portion 33b corresponds to an example of a "second end portion" in aspects of the present invention.

The second coupling portion 35 includes a pair of L-shaped portions 36 and a fourth meandering portion 37. The L-shaped portions 36 of the pair are provided at left and right end portions of the second coupling portion 35, respectively, and each have a substantially L-shaped planar shape. The L-shaped portions 36 of the pair are connected to the front end portions 33b of the first extending portions 31a and 31b, respectively.

The fourth meandering portion 37 extends between the pair of L-shaped portions 36 along the left direction (or the right direction). The fourth meandering portion 37 in the present embodiment has a substantially S-shape, and therefore, the second coupling portion 35 in the present embodiment extends in the left-right direction of the vehicle while repeatedly meandering in the front-rear direction. The fourth meandering portion 37 includes a seventh convex portion 371 and two eighth convex portions 372.

The seventh convex portion 371 in the present embodiment is curved to protrude toward the front direction in plan view. The shape of the seventh convex portion 371 is, but not particularly limited to, the same as that of the fifth convex portion 271. Note that the shape of the seventh convex portion 371 may be different from the shape of the fifth convex portion 271. Further, the shape of the seventh convex portion 371 may be a sector arc shape that is not the semicircle described above, a curved shape other than an arc, or a polygonal line shape.

On the other hand, the eighth convex portion 372 in the present embodiment is curved to protrude toward a rear direction in plan view. The shape of the eighth convex portion 372 is, but not particularly limited to, the same as that of the sixth convex portion 272. Note that the shape of the eighth convex portion 372 may be different from the shape of the sixth convex portion 272. The shape of the eighth convex portion 372 may be a sector arc shape that is not the semicircle described above, a curved shape other than an arc, or a polygonal line shape.

In the present embodiment, the seventh convex portion 371 is directly connected to the eighth convex portion 372. Note that the seventh convex portion 371 may be indirectly coupled to the eighth convex portion 372 via a straight portion.

The first communication hole 11 is formed between the first U-shaped portion 20 and the second U-shaped portion 30. This first communication hole 11 is a through hole that penetrates the substrate 10 in the thickness direction (up-down direction in the figure), and has a substantially U-shaped planar shape surrounded by the first U-shaped portion 20, the second U-shaped portion 30, and the wide portion 15.

This first communication hole 11 includes a pair of first gaps 111a and 111b, and a second gap 112. The first gap 111a is formed between the first extending portion 21a and the second extending portion 31a on the left side of the center line CL. This first gap 111a extends along the front direction. On the other hand, the first gap 111b is formed between the first extending portion 21b and the second extending portion 31b on the right side of the center line CL. This first gap 111b also extends along the front direction.

The first gaps 111a and 111b of the pair are each formed continuously along the front-rear direction inside the first U-shaped portion 20. Therefore, the entire left and right sides of the seat heater 1A can deform to expand and contract in the left-right direction in the figure. In particular, the first gaps 111a and 111b of the pair are formed at positions corresponding to the left and right thighs 2001 and 2002 of the occupant, and therefore can expand and contract in the left-right direction in the figure when a load is applied from the thighs 2001 and 2002.

The second gap 112 is formed between the first coupling portion 25 and the second coupling portion 35. This second gap 112 extends in the left-right direction, and couples the pair of first gaps 111a and 111b.

Further, the second communication hole 12 is formed inside the second U-shaped portion 30. The second communication hole 12 extends from the wide portion 15 along the front direction. Such a second communication hole 12 allows the seat heater 1A to deform to expand and contract along the left-right direction in the figure, even in a central portion.

As illustrated in FIGS. 2 and 3, the heater portion 40 including a conductor circuit 41 is formed on an upper surface of the substrate 10 as described above. The heater portion 40 generates heat by resistance by consuming power. The material constituting the heater portion 40 in the present embodiment may be, but not particularly limited to, a metal as an example. Examples of such a metal include, but not particularly limited to, aluminum, copper, copper alloy, silver, silver alloy, and stainless steel.

The heater portion 40 may be formed by, but not particularly limited to, patterning an aluminum foil of an aluminum foil/PET composite film by etching or the like, for example. This aluminum foil/PET composite film is a composite material in which an aluminum foil is bonded to a polyester film by an adhesive layer. A specific example of such an aluminum foil/PET composite film is, but not limited to, Al-PET (registered trademark) manufactured by Panac Co., Ltd., as an example.

As illustrated in FIG. 2, the conductor circuit 41 includes a first external connection portion 411, a second external connection portion 412, the first heating wire 413, and the second heating wire 414. The first external connection portion 411 is formed on the left side portion 151 of the wide portion 15 of the substrate 10. This first external connection portion 411 is electrically connected to a power supply source 80. On the other hand, the second external connection portion 412 is formed on the right side portion 152. This second external connection portion 412 is also electrically connected to the power supply source 80. These first and second external connection portions 411 and 412 are, but not particularly limited to, formed in a so-called solid pattern, for example. Note that, in the present embodiment, a case is illustrated in which the first external connection portion 411 is connected to a positive terminal of the power supply source 80, and the second external connection portion 412 is connected to a negative terminal of the power supply source 80, but this relationship may be reversed. Note that the power supply source 80 is, for example, a battery mounted on the vehicle or the like.

Note that the first and second external connection portions 411 and 412 are wider than the first and second heating wires 413 and 414, and therefore have a low resistance, hardly generating heat.

As illustrated in FIGS. 2 and 3, the first heating wire 413 is a thin wire formed on the first U-shaped portion 20, and is connected to the first and second external connection portions 411 and 412. The width of the first heating wire 413 is set thin, so that the resistance of the first heating wire 413 is high. Therefore, the first heating wire 413 generates heat by resistance by a current supplied via the first external connection portion 411.

The second heating wire 414 is a thin wire formed on the second U-shaped portion 30, and is connected to the first and second external connection portions 411 and 412. The width of the second heating wire 414 is set to be approximately the same as the width of the first heating wire 413, and the second heating wire 414 generates heat by resistance by a current supplied from the first external connection portion 411.

The first heating wire 413 is made up of a single thin wire densely packed on the first U-shaped portion 20. The first heating wire 413 is densely packed by, but not particularly limited to, being curved a plurality of times on the first U-shaped portion 20. More specifically, the first heating wire 413 includes a plurality of first thin wires that extend along meandering directions of the first extending portions 21a and 21b, and arc-shaped second thin wires connecting the first thin wires. The second heating wire 414 is also made up of a single thin wire formed on the second U-shaped portion 30, and is densely packed like the first heating wire 413.

Note that the heat generating structure of the heater portion 40 is not limited to the above. For example, instead of the first and second heating wires 413 and 414, a high resistor made of a carbon-based material or a polymer-based material and a supply wiring for supplying power to the high resistor may be provided.

As illustrated in FIG. 3, the insulating resist layer 50 is formed on the substrate 10 to cover the heater portion 40 as configured above. This insulating resist layer 50 protects the heater portion 40. An example of a material constituting this insulating resist layer 50 is a resin resist and the like, and examples of such a resin resist include an epoxy-based resist and a polyester-based resist. The insulating resist layer 50 can be formed by applying and curing such a resin resist.

The adhesive layer 60 is formed on a lower surface of the substrate 10. An example of a material constituting this adhesive layer 60 is, but not particularly limited to, a hot melt adhesive. An example of the hot melt adhesive is a polyurethane-based hot melt adhesive.

As illustrated in FIGS. 2 and 3, the lower surface of the substrate 10 is attached to the substrate holding portion 70 via the adhesive layer 60. The substrate holding portion 70 holds the substrate 10. Examples of such a substrate holding portion 70 include a nonwoven fabric and a foamed resin thin plate. Examples of nonwoven fabric include polyester and felt, and an example of the foamed resin thin plate is a urethane foam thin plate and the like. In particular, the foamed resin thin plate, which is flexible, can improve the flexibility of the seat heater 1A.

Further, in order to improve the breathability of the seat heater 1A, this substrate holding portion 70 may be formed with slits or through holes. The slits or through holes may be provided so as to circumvent the substrate 10 or so as to be arranged across the substrate 10.

The seat heater 1A in the present embodiment as described above includes the first U-shaped portion 20 and the second U-shaped portion 30, which are spaced apart from each other. In other words, the first communication hole 11 is formed between the first U-shaped portion 20 and the second U-shaped portion 30. Furthermore, since the first and second extending portions 21a, 21b and 31a, 31b of the first and second U-shaped portions 20 and 30 extend in the front-rear direction while meandering in the left-right direction, the seat heater 1A is easily deformed in either the front-rear or left-right direction. Therefore, the seat heater 1A is less likely to be restricted in deformation in a specific direction, thereby improving seating comfort.

The seat heater 1A in the present embodiment also includes the first and second coupling portions 25 and 35. Therefore, even when the occupant sits on the seat 90 with the occupant's own legs crossed or with the occupant's own body shifted diagonally or to the side, the legs can be warmed. Further, since the leg parts of the body have less fat than the buttock parts, and are therefore more susceptible to warmth, the seat heater 1A can quickly make the occupant feel warm in a variety of seating positions.

Further, since the first and second coupling portions 25, 35 are located on the front side, heat is less likely to escape in the front direction compared to a seat heater that does not have the first and second coupling portions, thereby warming the occupant more efficiently. This makes it possible for the seat heater 1A in the present embodiment to achieve power saving.

### <Second Embodiment>

A seat heater 1B in a second embodiment differs from the first embodiment mainly in that it further includes coupling portions 16a and 16b that couple the first U-shaped portion 20 and the second U-shaped portion 30. Only the differences in the seat heater 1B in the second embodiment from the first embodiment will be described below, and the same reference numerals are used to designate the same components as those of the first embodiment, and the description thereof will be omitted.

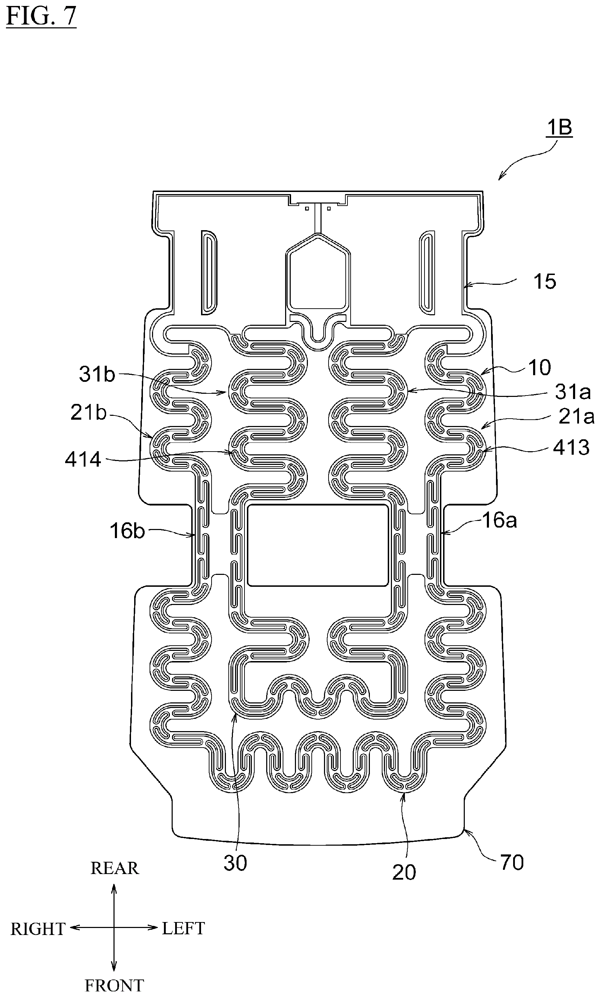

FIG. 7 is a plan view illustrating the seat heater 1B in the second embodiment. As illustrated in FIG. 7, the substrate 10 in the second embodiment further includes the coupling portions 16a and 16b that couple the first U-shaped portion 20 and the second U-shaped portion 30. In addition, the first and second heating wires 413 and 414 described above are also formed on the coupling portions 16a and 16b such that they are spaced apart from each other.

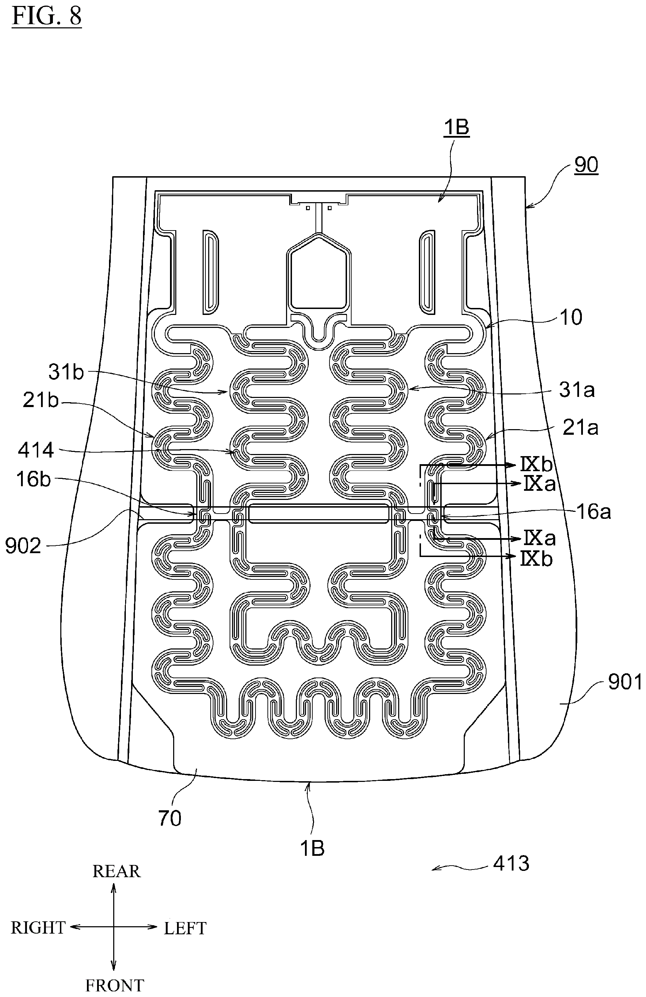

FIG. 8 is a plan view illustrating the seat 90 in which the seat heater 1B in the second embodiment is installed. The coupling portions 16a and 16b are fixed inside a hanging groove 902 when the seat heater 1B is installed in the seat 90. Such coupling portions 16a and 16b being formed makes it possible to easily install the seat heater 1B in the seat 90.

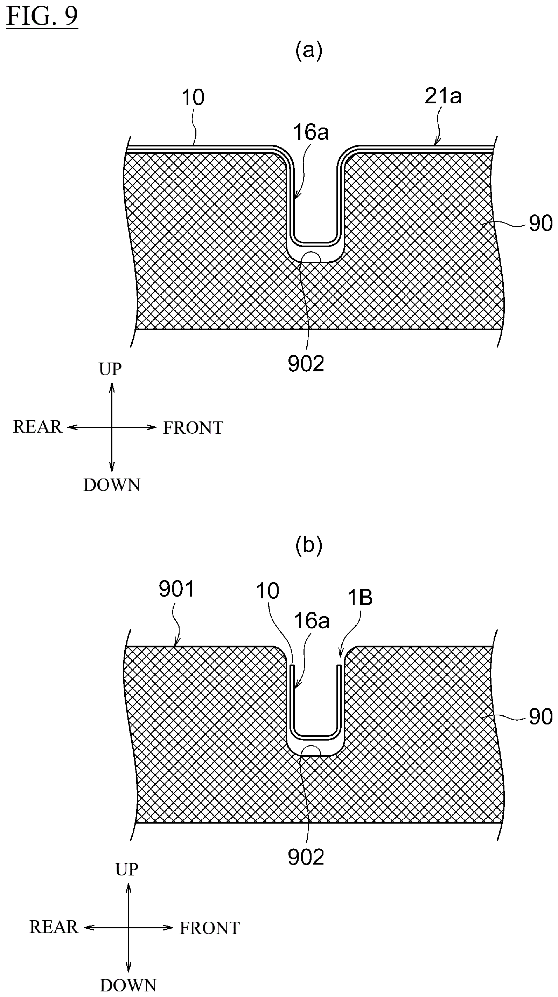

In FIG. 9, (a) is a cross-sectional view taken along line IXa-IXa of FIG. 8, and (b) is a cross-sectional view taken along line IXb-IXb of FIG. 8. Note that, for the sake of convenience of explanation, only the substrate 10 and the seat 90 are illustrated in (a) and (b) of FIG. 9.

As illustrated in (a) and (b) of FIG. 9, the hanging groove 902 is a groove with a bottom formed in the seat surface of the seat 90. The hanging groove 902 in the present embodiment extends in the left-right direction of the vehicle, and is also recessed downward of the vehicle. Note that the direction in which the hanging groove 902 extends may be a direction other than the left-right direction.

The coupling portion 16a of the substrate 10 is accommodated inside the hanging groove 902 in a state where it is curved downward. This curved coupling portion 16a is fixed to the seat 90 by a fixing jig (not illustrated). Thus, the seat 90 and the seat heater 1B are fixed to each other. The coupling portion 16b is also fixed to the seat 90 inside the hanging groove 902 by a fixing jig (not illustrated).

Also in the seat heater 1B described above, the substrate 10 includes the first U-shaped portion 20 and the second U-shaped portion 30 arranged inside the first U-shaped portion 20, and accordingly, most of the first U-shaped portion 20 and most of the second U-shaped portion 30 are separated from each other. Furthermore, the first and second extending portions 21a, 21b and 31a, 31b of the first and second U-shaped portions 20 and 30 extend in the front-rear direction while meandering in the left-right direction. Therefore, as with the seat heater 1B, the seat heater 1B is less likely to be restricted in deformation in a specific direction, thereby improving seating comfort.

### <Third Embodiment>

A seat heater 1C in a third embodiment differs from the first embodiment mainly in that the second meandering portions 32a and 32b are designed so as not to overlap with a sensor portion 3000a of a pressure-sensitive sensor 3000 in plan view, and in that the second extending portions 31a and 31 are provided with expanded portions 38a and 38b that are connected to the second meandering portions 32a and 32b, respectively. Only the differences in a wiring board assembly in the third embodiment from the first embodiment will be described below, and the same reference numerals are used to designate the same components as those of the first embodiment, and the description thereof will be omitted.

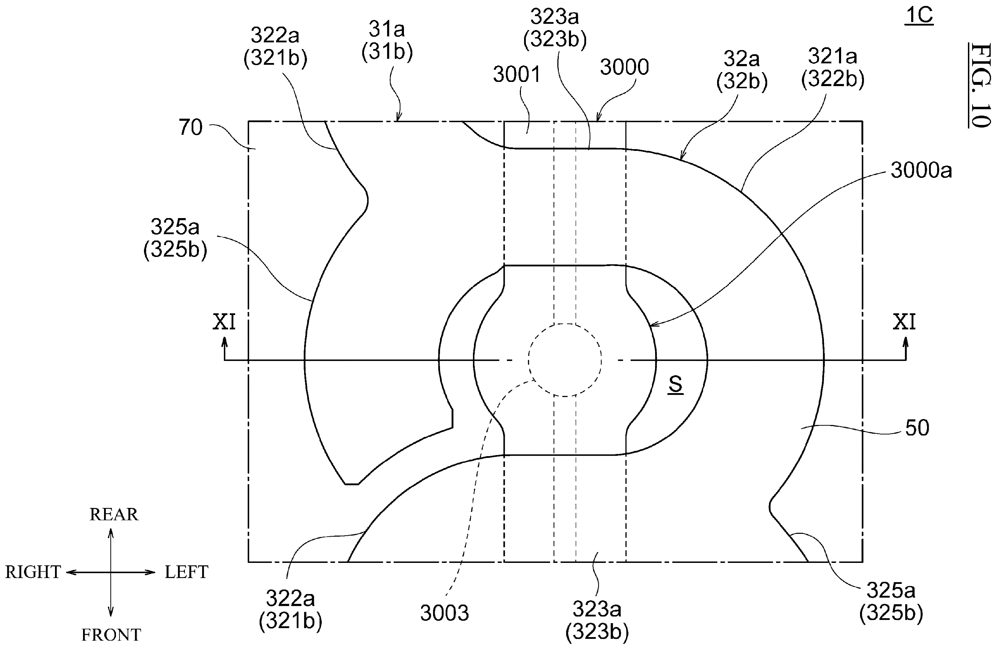

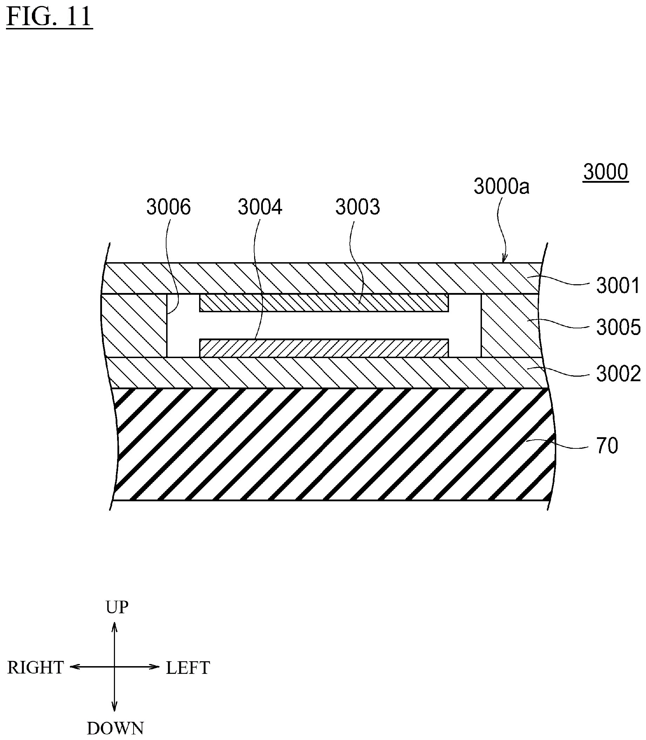

FIG. 10 is an enlarged plan view illustrating the seat heater 1C in the third embodiment of the present invention. FIG. 11 is a cross-sectional view taken along line XI-XI of FIG. 10.

As illustrated in FIGS. 10 and 11, in the present embodiment, the pressure-sensitive sensor 3000 is embedded in the substrate holding portion 70 of the seat heater 1C. This pressure-sensitive sensor 3000 is, but not particularly limited to, a seating sensor (so-called seat belt reminder sensor), and can determine whether or not an occupant sits on the seat by detecting pressure. The pressure-sensitive sensor 3000 is operated by, but not particularly limited to, power from the power supply source 80 (see FIG. 2).

The sensor portion 3000a of the pressure-sensitive sensor 3000 in the present embodiment is arranged at a position corresponding to the rear side of the left and right thighs 2001 and 2002 from the center of the buttocks 1000 (see FIG. 1). The sensor portion 3000a is arranged, but not particularly limited to, inside the second meandering portions 32a and 32b. In other words, the second meandering portions 32a and 32b meander so as to surround the periphery of the sensor portion 3000a of the pressure-sensitive sensor 3000, and do not overlap with the sensor portion 3000a in plan view.

As illustrated in FIG. 11, this pressure-sensitive sensor 3000 includes an upper substrate 3001, a lower substrate 3002, an upper electrode 3003, a lower electrode 3004, and a spacer 3005.

The upper substrate 3001 and the lower substrate 3002 are sheet-like resin members, and, for example, are made of a flexible insulating material such as polyethylene terephthalate or polyethylene naphthalate. The lower substrate 3002 is adhered to the substrate holding portion 70 with an adhesive (not illustrated) or the like.

The upper electrode 3003 is formed on the lower surface of the upper substrate 3001. This upper electrode 3003 is formed by printing a conductive paste such as silver paste, copper paste, or carbon paste on the lower surface of the upper substrate 3001 and then curing it. The lower electrode 3004 is formed on the upper surface of the lower substrate 3002. This lower electrode 3004 is also formed by printing a conductive paste such as silver paste, copper paste, or carbon paste on the upper surface of the lower substrate 3002 and then curing it.

Examples of printing methods for forming the upper electrode 3003 and the lower electrode 3004 include screen printing, gravure offset printing, and inkjet printing. Note that the upper electrode 3003 and the lower electrode 3004 may each be made up of a plurality of layers.

The spacer 3005 is interposed between the upper substrate 3001 and the lower substrate 3002, and defines the distance between them. This spacer 3005 includes an opening 3006 that accommodates the upper electrode 3003 and the lower electrode 3004, and surrounds the upper electrode 3003 and the lower electrode 3004.

In such a pressure-sensitive sensor 3000, when a load is applied from above to the sensor portion 3000a, the upper electrode 3003 and the lower electrode 3004 are electrically connected. Detecting this electrical connection makes it possible to detect that an occupant sits on.

In this way, when the pressure-sensitive sensor is disposed in the seat, the size of the space inside the second meandering portion may be set large to avoid overlapping between the second meandering portion and the sensor portion. This may result in a decrease in the area occupied by the heat generating portion of the seat heater per unit area.

In contrast, in the seat heater 1C in the present embodiment illustrated in FIG. 10, since the second extending portions 31a and 31b have the expanded portions 38a and 38b, the area that can be heated can be sufficiently large even if a space S inside the second meandering portions 32a and 32b is large.

An expanded portion 325a in the present embodiment extends so as to protrude from the fourth convex portion 322a of the second meandering portion 32a, and is formed on the opposite side to the third convex portion 321a with respect to the sensor portion 3000a. The base of this expanded portion 325 is connected to the fourth convex portion 322a, while the tip of the expanded portion 325 is not connected to any other portion of the second meandering portion 32a.

In this way, one end of the expanded portion 325 is a fixed end and the other is a free end, so that the area that can be heated can be increased while the stretchability of the second extending portion 31a as described above is maintained. Further, one end of the expanded portion 325a being a free end makes it less likely to cause the occupant sitting to feel uncomfortable.

Note that, although not illustrated in detail, the expanded portion 325a is also formed on the front side of the third convex portion 321a of the second meandering portion 32a. This expanded portion 325a extends so as to protrude from the third convex portion 321a, and is formed on the opposite side to the fourth convex portion 322a with respect to the sensor portion 3000a.

Further, a similar extending portion is also formed in the second extending portion 31b. The expanded portion 325b of the second meandering portion 32b extends so as to protrude from the third convex portion 321b, and is formed on the opposite side to the fourth convex portion 322b with respect to the sensor portion 3000a. The expanded portion 325b is also formed on the front side of the fourth convex portion 322b of the second meandering portion 32b. This expanded portion 325b extends so as to protrude from the fourth convex portion 322b, and is formed on the opposite side to the third convex portion 321b with respect to the sensor portion 3000a. The base of this expanded portion 325b is a fixed end, and the tip is a free end. Therefore, in the present embodiment, the area that can be heated can be increased while the stretchability of the second extending portion 31a is maintained. In addition, it is less likely to cause the occupant sitting to feel uncomfortable.

Note that the embodiments described above are described to facilitate understanding of the present invention, and are not described to limit the present invention. Therefore, the elements disclosed in the above-described embodiments are meant to include all design changes and equivalents that fall within the technical scope of the present invention.

For example, a cover film may be attached to the insulating resist layer 50. The cover film may be made of, for example, PET. By attaching the cover film, the durability of the seat heaters 1A to 1C can be improved. In addition, by attaching the cover film, a neutral plane can be positioned at the heater portion 40 for the seat heaters 1A to 1C, so that distortion of the heater portion 40 when the seat heaters 1A to 1C are each bent can be suppressed. This makes it possible to prevent fatigue damage to the first and second heating wires 413 and 414.

Further, in the present embodiment, the seat heaters 1A to 1C are each attached to the seat surface 901 of the seat 90 so that the substrate holding portion 70 comes into contact with the seat surface 901, but the present invention is not limited to this. The seat heaters 1A to 1C may each be attached to the seat surface 901 so that the substrate holding portion 70 is the uppermost surface. This allows the thickness of a wadding for a trim cover to be reduced or the wadding to no longer be necessary, thereby reducing costs.

### Description of Reference Numerals

- 1A to 1C: Seat heater
10 Substrate
11 First communication hole
111a, 111b First gap
112 Second gap
12 Second communication hole
15 Wide portion
151 Left side portion
152 Right side portion
16 Coupling portion
20 First U-shaped portion
21a, 21b First extending portion
22a, 22b First meandering portion
221a, 221b First convex portion
222a, 222b Second convex portion
223a, 223b First straight portion
224a First opening
224b Second opening
23a Rear end portion
23b Front end portion
25 First coupling portion
26 L-shaped portion
27 Third meandering portion
271 Fifth convex portion
272 Sixth convex portion
273 Third straight portion
30 Second U-shaped portion
31a, 31b Second extending portion
32a, 32b Second meandering portion
321a, 321b Third convex portion
322a, 322b Fourth convex portion
323a, 323b Second straight portion
324a Third opening
324b Fourth opening
325a, 325b Expanded portion
33a Rear end portion
33b Front end portion
35 Second coupling portion
36 L-shaped portion
37 Fourth meandering portion
371 Seventh convex portion
372 Eighth convex portion
40 Heater portion
41 Conductor circuit
411, 412 First and second external connection portions
413 First heating wire
414 Second heating wire
50 Insulating resist layer
60 Adhesive layer
70 Substrate holding portion
- 80: Power supply source
- 90: Seat
901 Seat surface
902 Hanging groove
- 1000: Buttocks
- 2000: Thighs
2001 Left thigh
2002 Right thigh
- 3000: Pressure-sensitive sensor
3001 Upper substrate
3002 Lower substrate
3003 Upper electrode
3004 lower electrode
3005 Spacer

## Claims

1. A seat heater comprising:
a flexible substrate; and
a heater portion formed on the substrate, wherein
the substrate includes:
a first U-shaped portion that has a substantially U-shaped planar shape; and
a second U-shaped portion that is provided inside the first U-shaped portion and having a substantially U-shaped planar shape,
the first U-shaped portion includes:
a pair of first extending portions that extend along a first direction; and
a first coupling portion that couples first ends of the pair of first extending portions,
the second U-shaped portion includes:
a pair of second extending portions that extend substantially parallel to the first extending portions; and
a second coupling portion that couples second ends of the pair of second extending portions,
the first extending portion includes a plurality of first meandering portions that are arranged along the first direction,
the second extending portion includes a plurality of second meandering portions that are arranged along the first direction,
the first meandering portion includes:
a first convex portion that is bent to protrude toward outside of the seat heater in plan view; and
a second convex portion that is bent to protrude toward inside of the seat heater in plan view,
the second meandering portion includes:
a third convex portion that is bent to protrude toward outside in plan view; and
a fourth convex portion that is bent to protrude toward inside in plan view.

2. The seat heater according to claim 1, wherein
the first coupling portion includes a plurality of third meandering portions that are arranged along a second direction different from the first direction, and
the third meandering portion includes:
a fifth convex portion that is bent to protrude toward outside of the seat heater in plan view; and
a sixth convex portion that is bent to protrude toward inside of the seat heater in plan view.

3. The seat heater according to claim 2, wherein
the second coupling portion includes a fourth meandering portion, and
the fourth meandering portion includes:
a seventh convex portion that is bent to protrude toward outside of the seat heater in plan view; and
an eighth convex portion that is bent to protrude toward inside of the seat heater in plan view.

4. The seat heater according to any one of claims 1 to 3, wherein
the third convex portion faces a first opening between the second convex portions adjacent to each other.

5. The seat heater according to claim 4, wherein
the fourth convex portion of one of the second extending portions faces the fourth convex portion of the other of the second extending portions.

6. The seat heater according to any one of claims 1 to 5, wherein
the first to fourth convex portions each have an arc shape.

7. The seat heater according to any one of claims 1 to 6, wherein
the first meandering portion includes a first straight portion that couples the first convex portion and the second convex portion,
the second meandering portion includes a second straight portion that couples the third convex portion and the fourth convex portion, and
a length of the second straight portion is longer than a length of the first straight portion.

8. The seat heater according to claim 3, wherein
the fifth to eighth convex portions each have an arc shape.
